Europäisches Patentamt

**European Patent Office**

Office européen des brevets

(11) Publication number: **0 292 034 B1**

## EUROPEAN PATENT SPECIFICATION

(45) Date of publication of patent specification: **17.06.92** (51) Int. Cl.⁵: **A23P 1/16**

(21) Application number: **88200769.3**

(22) Date of filing: **21.04.88**

The file contains technical information submitted after the application was filed and not included in this specification

(54) **Alcohol-, fat- and protein-containing foamable product, as well as process for the preparation thereof.**

(30) Priority: **22.04.87 NL 8700955**

(43) Date of publication of application:
**23.11.88 Bulletin 88/47**

(45) Publication of the grant of the patent:
**17.06.92 Bulletin 92/25**

(84) Designated Contracting States:
**AT BE CH DE ES FR GB GR IT LI LU NL SE**

(56) References cited:
**DE-A- 3 123 972**
**US-A- 3 519 440**

**E. CAMPBELL: "ENCYCLOPEDIA OF WORLD COOKERY" 10th edition, 1968, Spring Books, GB, page 224**

**CHEMICAL ABSTRACTS, vol. 87, no. 25, 19th December 1977, page 564, no. 199491k, Columbus, Ohio, US; & JP-A-77 56 106 (ASAHI DENKA KOGYO K.K.) 09-05-1977**

(73) Proprietor: **Evers, Paulus Hendricus Johannes Maria**
**Creytestraat 11**
**NL-5841 AL Oploo(NL)**

(72) Inventor: **Evers, Paulus Hendricus Johannnes Maria**
**Creytestraat 11**
**NL-5841 AL Oploo(NL)**

(74) Representative: **van der Saag, Johannes et al**
**Octrooibureau Vriesendorp & Gaade Dr. Kuyperstraat 6, Postbus 266**
**NL-2501 AW 's-Gravenhage(NL)**

Rank Xerox (UK) Business Services

**Description**

The invention relates to an alcohol, fat and protein containing product.

DE - A - 312 3972 describes such foamable products consisting of a mixture of cream, protein, water and alcohol. According to an example such a product may contain tetranatriumpyrophosphate. Generally the alcohol has a destabilizing effect on the foam obtained by whisking such a product, in particular when it has a high content of alcohol.

Now it has been found that when a foamble product consisting of a homogenized mixture of fat, protein, water, alcohol and a calcium source contains lactates in an amount of at least 0,05 g/kg and/or polyphosphate, e.g. sodiumhexaphosphate, in an amount of at least 0,05 g/kg these substances appear to be excellent stabilizing agents for the foam obtained by whisking the product.

All possible polyphosphaten that are allowed in food production can be used as stabilizing agents in a product according to the invention.

The lactates may consist of a dialysis product of milk, obtained for instance by an ultrafiltration treatment.

The polyphosphates and the lactates are preferably used in amounts of 0,1-2 g/kg product, and most favourable in amounts of 0,3-1 g/kg product.

It is preferable that apart from a polyphosphate and/or lactate, the product also comprises one or more components that are known to stabilize foam that contains no alcohol, such as a polypropylene glycolalginate in an amount of 0.2-5 g/kg product and/or pectine in an amount of 0.1-5 g/kg product.

As a calcium source, e.g. cream powder or liquid cream can be used. Milk powder and milk can also be used for that purpose. The calcium source is added in such an amount, that the foamable product contains 1-70 g Ca per kg.

The invention also relates to a process for the preparation of a foamable product that is characterized in that a mixture of alcohol and water is added to a mixture of a calcium source, a protein, fat and one or more foam stabilizing agents, of which at least one is a polyphosphate, e.g. natrium hexametaphosphate, or comprises lactates, and possibly sweeteners, and in that subsequently the pH is adjusted to a value below 5 and in that the whole mixture is homogenized at increased pressure after possible addition of sweeteners, colouring agents and flavours. In this way substances can be included in the product that provide it with e.g. a chocolate, cocoa, vanilla and caramel flavour. Possible sweeteners are glucose, saccharose, dextrose, corn sugar, corn syrup, and synthetic sweeteners such as saccharin and aspartane.

The pH is preferably adjusted to a value of approximately 5 by means of glucondeltalactone.

The pH reduction from 5.5 to below 5 is usually effected with other acids. Preferably tartaric acid, ascorbic acid and/or malic acid are used for that purpose. In small quantities, these acids provide a relatively steep pH reduction, which entails, however, a relatively slight acid impression on the taste.

Generally it is preferred that the calcium source consists of a mixture of spraydried cream powder or liquid cream, water and one or more emulsifiers. The cream also favourably effects the sensation in the mouth as experienced by the consumer of the foamed final product, viz. the taste of a creamy product. As a calcium source, the cream powder can be replaced by milk powder, milk and other calcium sources.

Casein, soya proteins and the like can be applied for protein. Sodium caseinate is preferred. This has an emulsifying function that is many times stronger than that of monoglycerides. A product according to the invention may contain 1-70 g protein and 30-400 g fat per kg.

The alcohol can be present up to high percentages in a product according to the invention, e.g. in a percentage of the total weight of 4-45.

The alcohol can also be applied in the form of spririts, such as wine, molasses alcohol, wodka, brandy and liqueurs. Liqueurs are preferred.

The fat applied in a product according to the invention preferably has a low melting point, favourably below 32°C. E.g. coconut oil, cotton seed oil, peanut oil and palm oil can be applied. Coconut oil is preferred.

Products according to the invention can be whisked by hand or by electrical whiskers. The foaming can also be performed from an aerosol can. In all cases the obtained foam is stable in a temperature range of -8°C to 50°C when using alcohol up to a maximum alcohol content of 40 vol.%. The foam is resistant to acid up to a pH of about 2.

If an extremely high stability of the foam that has been obtained with a product according to the invention is desired, e.g. when the foam is applied to hot beverages such as coffee, it is advisable to further homogenize the foamable product. It has been found that if the product according to the invention is homogenized at a pressure of 200 to 300 kg/cm$^3$ and a temperature below 20°C, the thus obtained foam is very stable.

The invention also relates to an aerosol can containing the product as described above, as well as a propellant, preferably $N_2O$ gas, which has been pressurized.

The invention is further elucidated in the following example.

Example

A foamable product was prepared from the following groups of ingredients.

|  |  | grammes |
|---|---|---|
| Group 1: | distilled monoglyceride | 1.80 |
|  | lactic acid ester of monoglyceride | 9.50 |
|  | acetic acid ester of monoglyceride | 6.80 |
|  | coconut fat (melting point 31°-32°C) | 67.50 |
| Group 2: | cream powder (55% fat) | 45.00 |
|  | sodium caseinate | 10.80 |
|  | antioxydants butylated hydroxy anisol + butylated hydroxytoluene | 0.10 |
|  | water | 200.00 |
| Group 3: | water | 160.00 |
|  | lactate and polyphosphates (dl-6) | 0.54 |
|  | trisodium citrate | 0.90 |
|  | propylene glycolalginate (low viscosity) | 1.26 |
|  | propylene glycolalginate (high viscosity) | 0.27 |
|  | high molecular citric pectine | 1.80 |
| Group 4: | glucose | 40.50 |
|  | saccharose | 180.00 |
|  | corn sugar (hydrolyzed starch) | 180.00 |
| Group 5: | alcohol 96% | 123.90 |
|  | water | 157.00 |
|  | flavour and colouring | as required |
| Component 6 glucondeltalacton |  | 3.00 |
| Component 7 tartaric acid, ascorbic acid, malic acid |  | 0.10 |

The monoglycerides of group 1 and the lactic acid and acetic acid esters thereof are emulsifyers with which the coconut fat and the milk fat originating from the cream powder of group 2 are emulsified. The coconut fat can be replaced by any other fat with a sufficiently low melting point in view of its taste. the components of group 1 are heated up to 80°C while mixing intensively. This is also done with the components of group 2. Subsequently the components of groups 1 and 2 are mixed at 80°C, at which temperature the mixture is homogenized at a pressure of 180 kg/cm$^2$

The components of group 3 are mixed separately for a minimum of 30 minutes at 85°C and added to the homogenized mixture of groups 2 and 3, after which the sweeteners of group 4 are added. Mixing is continued until all ingredients are dissolved, after which the mixture is quickly cooled to below 5°C. After stirring for at least one hour at this low temperature, the components of group 5 are added close to the stirrer and under continuous stirring. This method of adding is important because milk components should not be exposed to high alcohol percentages for too long.

Subsequently components 6 are added and mixing continuous until the glucondeltalacton are completely dissolved.

Then one stirs very slowly or for ten minutes normally every 2 hours for a minimum of 48 hours. Finally the pH is adjusted to 5.0 to 5.1 by means of component 7, after which the final product is homogenized at a pressure of 5.0 kg/cm$^2$. Then the product is suitable to fill the containers with. It will remain liquid in the containers for at least one year. It does not show viscosity increase if stored at a constant temperature.

## Claims

1.  Foamable product consisting of a homogenized mixture of fat, protein, water, alcohol and a calcium source containing lactates in an amount of at least 0,05 g/kg and/or polyphosphate, e.g. sodium hexametaphosphate, in an amount of at least 0,05 g/kg.

2.  Product according to claim 1, **characterized in that** the lactates consist of a dialysis product of milk.

3.  Product according to one of the preceding claims,
    characterized in that the product comprises one or more components that have a foam-stabilizing effect on a foam containing no alcohol.

4.  Product according to claim 3, **characterized in that** one or more foam stabilizers, belonging to a group consisting of polypropylene glycolalginates and pectine, are present therein.

5.  Product according to one of the preceding claims,
    **characterized in that** cream functions as a calcium source.

6.  Aerosol container containing a product according to one of the claims 1-5, as well as a pressurized propellant.

7.  Process for the preparation of a product according to one of claims 1-5**, characterized in that** while stirring, a mixture of water and alcohol is added to a homogenized mixture of a calcium source, water, protein, one or more foam stabilizers, one of which being a polyphosphate or comprising one or more lactates, and if desired, sweeteners, colouring agents and flavours.

8.  Process according to claim 7, **characterized in that** the homogenized mixture is cooled to below 5°C before adding the mixture of alcohol and water.

9.  Process according to claim 8, **characterized in that** after having added the water and alcohol, the pH is lowered to at least 5.5.

10. Process according to claim 9, **characterized in that** at least the first stage of lowering the pH is effected by adding glucondeltalactone

11. Process according to claim 10, **characterized in that** the last stage of lowering the pH is effected by adding tartaric acid, ascorbic acid and/or malic acid.

12. Process according to one of the preceding claims 7-11, **characterized in that** the calcium source consists of spraydried cream powder or liquid cream.

4

**Revendications**

1. Produit moussant consistant en un mélange homogénéisé de graisse, de protéine, d'eau, d'alcool et d'une source de calcium contenant des lactates en une quantité d'au moins 0,05 g par kg et/ou un polyphosphate, par exemple de l'hexamétaphosphate de sodium, en une quantité d'au moins 0,05 g par kg.

2. Produit suivant la revendication 1, caractérisé en ce que les lactates consistent en un produit de dialyse du lait.

3. Produit suivant l'une quelconque des revendications précédentes, caractérisé en ce que le produit comprend un ou plusieurs composants qui ont un effet de stabilisation sur une mousse ne contenant pas d'alcool.

4. Produit suivant la revendication 3, caractérisé en ce qu'un ou plusieurs stabilisants de la mousse, appartenant à une classe formée par les alginates de polypropylèneglycol et la pectine, y sont présents.

5. Produit suivant l'une quelconque des revendications précédentes, caractérisé en ce que de la crème sert de source calcium.

6. Récipient d'aérosol contenant un produit suivant l'une quelconque des revendications 1 à 5, outre un propulseur sous pression.

7. Procédé de préparation d'un produit suivant l'une quelconque des revendications 1 à 5, caractérisé en ce que sous agitation, un mélange d'eau et d'alcool est ajouté à un mélange homogénéisé d'une source de calcium, d'eau, de protéine, d'un ou plusieurs stabilisants de la mousse, dont l'un est un polyphosphate ou comprend un ou plusieurs lactates, et, si la chose est souhaitée, d'édulcorants, de colorants et d'arômes.

8. Procédé suivant la revendication 7, caractérisé en ce que le mélange homogénéisé est refroidi jusqu'au-dessous de 5°C avant l'addition du mélange d'alcool et d'eau.

9. Procédé suivant la revendication 8, caractérisé en ce qu'après l'addition de l'eau et de l'alcool, le pH est abaissé jusqu'à au moins 5,5.

10. Procédé suivant la revendication 9, caractérisé en ce qu'au moins le premier stade d'abaissement du pH est effectué par addition de gluconodeltalactone.

11. Procédé suivant la revendication 10, caractérisé en ce que le dernier stade d'abaissement du pH est effectué par addition d'acide tartrique, d'acide ascorbique et/ou d'acide malique.

12. Procédé suivant l'une' quelconque des revendications 7 à 11, caractérisé en ce que la source de calcium consiste en crème en poudre, séchée par pulvérisation, ou en crème liquide.

**Patentansprüche**

1. Schäumbares Produkt bestehend aus einer homogenisierten Mischung von Fett, Protein, Wasser, Alkohol und einer Kalziumquelle, die Laktate in einer Menge von wenigstens 0,05g/Kg und/oder Polyphosphate wie zum Beispiel Natriumhexametaphosphat, in einer Menge von wenigstens 0,05g/Kg enthält.

2. Produkt nach Anspruch 1,
   **dadurch gekennzeichnet,** daß die Laktate aus einem Dialyse-Produkt von Milch bestehen.

3. Produkt nach einem der vorhergehenden Ansprüche,
   **dadurch gekennzeichnet,** daß das Produkt eine oder mehrere Komponenten umfasst, die eine Schaum-stabilisierende Wirkung auf einen, keinen Alkohol enthaltenden Schaum besitzen.

**4.** Produkt nach Anspruch 3,
**dadurch gekennzeichnet,** daß ein oder mehrere Schaumstabilisatoren darin enthalten sind, die zu einer Gruppe bestehend aus Polypropylen-Glycoalginaten und Pectinen gehören .

**5.** Produkt nach einem der vorhergehenden Ansprüche,
**dadurch gekennzeichnet,** daß Sahne als Kalzium-Quelle fungiert.

**6.** Aerosol-Behälter, der ein Produkt nach einem der Ansprüche 1-5, sowie ein unter Druck stehendes Treibmittel enthält.

**7.** Verfahren zur Herstellung eines Produktes nach einem der Ansprüche 1-5,
**dadurch gekennzeichnet,** daß während des Rührens eine Mischung aus Wasser und Alkohol der homogenisierten Mischung aus einer Kalzium-Quelle, Wasser, Protein, ein oder mehrere Schaumstabilisatoren, von denen einer ein Polyphosphat ist oder ein oder mehrere Laktate umfasst und wenn erwünscht, Süßstoffe, Farbstoffe und Geschmackstoffe, zugegeben wird.

**8.** Verfahren nach Anspruch 7,
**dadurch gekennzeichnet,** daß die homogenisierte Mischung vor Zugabe der Mischung von Wasser und Alkohol unter 5°C gekühlt wird.

**9.** Verfahren nach Anspruch 8,
**dadurch gekennzeichnet,** daß nach Zugabe von Wasser und Alkohol der pH auf wenigstens 5.5 gesenkt wird.

**10.** Verfahren nach Anspruch 9,
**dadurch gekennzeichnet,** daß wenigstens der erste Schritt der Senkung des pH's durch Zugabe von Glucondeltalacton bewirkt wird.

**11.** Verfahren nach Anspruch 10,
**dadurch gekennzeichnet,** daß der letzte Schritt der Senkung des pH's durch Zugabe von Weinsäure, Ascorbinsäure und/oder Malonsäure bewirkt wird.

**12.** Verfahren nach einem der vorhergehenden Ansprüche 7-11
**dadurch gekennzeichnet,** daß die Kalzium-Quelle aus sprühgetrocknetem Sahne-Pulver oder flüssiger Sahne besteht.